# EUROPEAN PATENT SPECIFICATION

(11) **EP 3 465 058 B1**
(45) Date of publication and mention of the grant of the patent: **19.08.2020**
(21) Application number: 17728685.3
(22) Date of filing: 19.05.2017
(51) Int. Cl.: F28F 3/02, F28F 3/12, F28F 1/02, F28F 1/12, F28D 1/02, F24D 19/00, F28F 1/04

(54) **LOW TEMPERATURE RADIATOR**
NIEDERTEMPERATUR-RADIATOR
RADIATEUR À BASSE TEMPÉRATURE

(30) Priority: 24.05.2016 NL 2016820
(43) Date of publication of application: 10.04.2019
(73) Proprietor: Van Holsteijn & Kemna Special Products B.V., 2629 HG Delft (NL)
(72) Inventor: VAN HOLSTEIJN, Robertus Cornelis Adrianus, 2636 HS Schipluiden (NL); KEMNA, René Bertinus Joannes, B-1190 Brussel (BE)
(74) Representative: EP&C
(86) International application number: PCT/NL2017/050321
(87) International publication number: WO 2017/204627

(56) References cited:
- WO-A1-2006/077455
- CH-A- 436 629
- DE-C- 656 167
- US-A- 3 162 243

## Description

The present invention relates to a radiator for the transfer of heat between a fluid in an interior thereof and a surrounding environment.

As a means to control the temperature of rooms, in particular for heating rooms, it is known to use radiators. In radiators, heat is transferred between a fluid flow and the environment. The radiator therefore comprises fluid channels and fins, such that conductive heat transfer can take place between the fluid and the radiator and that convective heat transfer, in particular natural convection, can take place between the radiator and the surrounding environment.

In order to make heating systems as efficient as possible, it has become common practice in the field of climate control to provide radiators over which the temperature difference between the fluid, entering the radiator, and the environment is relatively low. Such radiators are generally known as Low Temperature (LT) radiators.

As a result of these lower temperature differences, the amount of radiative heat transfer, scaling with the temperature difference to the power four, reduces dramatically and the main component of the heat transfer becomes convection. To increase convective heat transfer at these lower temperature differences instead of steel plate, materials with a significantly higher thermal conductivity are used like copper and aluminium, leading to higher costs for low temperature radiators.

To adapt the radiator for specific dimensions or heating requirements of the environment, modular radiators are known, for example from WO2006/077455 A1 and WO2013/068991 A1. Modules of such radiators comprise fluid channels with outwardly extending fins, wherein the fluid flows through the channels and wherein the fins provide for a large surface area for natural convection to take place. In such radiators, several fluid channels can be combined to adapt the dimensions of the radiator.

The modules of the known modular radiators are generally made of aluminium and are generally manufactured through extrusion or die-casting.

A disadvantage of these known modular radiators with extruded or die-casted modules is however that, due to the manufacturing process and the product configuration, the material usage for fluid channels and fins is high. As a result, the efficiency of the known modular radiators in terms of 'heat output relative to the amount of material used' is relatively low. In other words, material costs for these low temperature radiators are high.

It is an object of the invention to provide a radiator that lacks the above-mentioned drawbacks or at least to provide an alternative, preferably an alternative with a higher heat-output-to-weight-ratio.

The invention provides a radiator, configured to transfer heat between a fluid, such as water, in an interior thereof and a surrounding environment, wherein the radiator comprises:
- an extruded body, comprising at least four fluid channels therein, of which a fluid flow direction substantially extends in a first direction and wherein the fluid channels are disposed adjacent each other in a second direction, which is perpendicular to the first direction;
- two closure elements, sealingly mounted against head ends of the extruded body and of the fluid channels;
- fins on sides of the extruded body to form elongate air channels, wherein the fins are configured to increase the interfacial area between the radiator and the environment; and
- a casing comprising multiple wall elements which extend in the second direction, wherein the casing is configured to increase the draft of air through the air channels, **characterized in that** the closure elements form connection channels, which are configured to fluidly connect adjacent fluid channels in series and in that an air flow through the air channels extends in the second direction.

After installation of the radiator, in an embodiment thereof, the first direction extends horizontally and the second direction extends vertically.

A radiator according to the invention provides the advantage over prior art modular radiators in that the material usage for both the fluid channels and the fins can be reduced, without decreasing the heat-output of the radiator. Additionally, the heat output of a radiator according to the invention can be increased, when compared to prior art modular radiators, having a similar projected floor surface area.

The casing of the radiator comprises multiple wall elements, which extend in the second direction. The casing thereby forms a large sleeve, surrounding the extruded body, the closure elements and the fins. The casing, however, preferably does not have a wall element perpendicular to the second direction, so an elongate channel is formed along the second direction through the casing.

The casing is configured to increase the draft of air through the air channels and therefore to increase the amount of heat transfer that is possible between the radiator and the environment, in particular the amount of heat transfer resulting from the natural convection.

The increased draft is caused by a stack effect in the casing. This stack effect is caused by a difference in density between warm and cold air, giving rise to an upward stream of air. Because of the casing, which may substantially extend above the extruded body, the heated air will not mix with colder ambient air, so the density difference will remain intact throughout the height of the entire casing, giving rise to increase draft of heated air.

Additionally, the casing serves the purpose to hide away the fins and the extruded body, which may look unappealing for a user, whereas the casing, preferably having smooth outer surfaces, may look more appealing.

The fins may, for a radiator according to the invention, be composed of thin pieces of foil. Since these foils are thin, they have a relatively high surface area, with which the heat transfer is facilitated, relative to their weight.

The thickness of the fins may be considerably lower than the thickness of the fins used in prior-art modular radiators. This is because the extrusion and die-cast processes, used to manufacture prior art radiators, do not allow for fins being that thin, or for features having at least one substantially small dimension. For features created by extrusion or die-casting, like the fins in the prior-art modular radiators, there is a minimum requirement for their dimensions, which follow from process parameters, materials properties and geometrical values.

The foil of the fins may be folded, such that portions of the foil are arranged against the extruded body while other portions extend away from the body. As such, heat can be transported from the extruded body towards the portions of the foil that extend away, after which the environment is heated at the portions that extend away from the body, thereby giving rise to natural convection.

The foil is folded such, that air channels are formed, which are defined by the body and the foil. A longitudinal axis of the air channels, along which the flow of the heated air occurs, is thereby arranged parallel to the second direction. As such, in a preferred embodiment, the flow in the air channels is directed in the vertical direction, which is optimal for natural convection.

The fins are, in an embodiment of the radiator, mounted, preferably brazed, to the extruded body. The foil of the fins can therefore be made of a different material than the aluminium that was used for the extruded body. Preferably, the fins are made of a material that has a very high heat transfer coefficient, so that the foil of the fins can be made very thin, but that sufficient heat conduction through the fins is maintained.

With respect to prior art fins, the thin foil fins may have a higher efficiency. This is caused by the reduced thickness of the fins, which allows for a higher fin density, and thus higher interfacial area between the fins and the environment.

In an embodiment of the radiator according to the invention, a heat-output-to-weight ratio of 80 - 100 watt per kilogram of material used (casing excluded), similar to a weight-to-heat-output ratio between 10 - 12,5 kilogram per kilowatt, can be achieved for a temperature regime of 45°C/35°C/20°C. This regime of 45°C/35°C/20°C is defined as being the regime for a radiator with a fluid inlet temperature of 45°C, a fluid outlet temperature of 35°C and the air temperature of the environment being 20°C, wherein heat is exchanged by means of natural convection only.

In comparison, prior art modular radiators have a weight-to-heat-output-ratio of 35 - 40 kilogram per kilowatt (casing excluded) and steel panel radiators have a weight-to-heat-output-ratio of 60 - 70 kilogram per kilowatt (casing excluded) in the same temperature regime for heat exchange by natural convection only.

This significantly higher heat-output at lower material usage, and therefore material costs, may be the result of the combined measures used in designing and dimensioning an embodiment of the radiator according to the invention:
- the preferred dimensions of the extruded body, with the fluid channels therein, being between 100 mm and 200 mm in the second direction and between 10 mm and 25 mm in a third direction, perpendicular to the first and second direction, leading to minimal material usage for the extruded body;
- the preferred dimensions of the fins, having a material thickness being less than or equal to 0.5 mm, a dimension in the second direction that is substantially equal or slightly less than that of the flat extruded body in the second direction and a dimension in the third direction of 25% - 60% of the fin dimension in the second direction, resulting in minimal material usage for the fins, without compromising on the amount of heat transfer;
- a fin density, being the amount of fins per unit length along the first direction, between 150 and 250 fins per meter, leading to a maximum number of optimised air channels, having a chimney effect, for transferring the heat from the fins to the air that flows through the channels;
- the increased contact area between the fins and the flat extruded body, resulting into optimal heat transfer from the extruded body to the fins;
- a single pathway for the fluid to flow through the body, thereby passing each of the fluid channels in series, which results in an increased length of the fluid pathway, as compared to prior art modular radiators with similar dimensions, while maintaining the counterflow heat exchange principle, providing for more efficient heat transfer of the fluid to the extruded body onto the fins, mounted to the body; and
- the position of the extruded body in a lower part of the casing, resulting in an increased thermal buoyancy in the remainder of the casing that extends above the extruded body.

When compared to prior art modular radiators with similar outer dimensions, a lower amount of material may be used for a radiator. This is achieved by the space above the extruded body, in the casing, which is not occupied with aluminium, but rather contains heated air to induce the chimney effect through the air channels.

In an embodiment, the fins are formed of thin sheets of metal. The sheets of the fins are folded in a serpentine matter, such that the fins comprise proximal surfaces, which extend parallel to the sides of the extruded body and with which the fins are configured to be mounted to the body, distal surfaces, which are parallel to the proximal surfaces and are distally set away from the proximal surfaces, and intermediate surfaces, which extend between the proximal surfaces and the distal surfaces.

In a further embodiment, the fins are provided with fin stiffening elements. The fin stiffening elements are formed of thin sheets of metal, which are folded in a serpentine manner and have a fin-like shape. Accordingly, the fin stiffening elements comprise proximal surfaces, distal surfaces and intermediate surfaces, similar to the fins.

The fin stiffening elements have a fin density along the first direction that corresponds to the fin density of the fins and have a length in the second direction that corresponds to the length of the fins. In the third direction, the fin stiffening elements have a dimension that is substantially smaller than that of the fins, such that a distance between the proximal surfaces and the distal surfaces in the third direction is, for the fin stiffening elements, substantially smaller than that of the fins.

The fin stiffening elements are configured to provide additional stiffness to the fins and to secure a spacing between the intermediate surfaces of the fins, such that the shape of the fins is maintained during the brazing of the fins onto the extruded body. To achieve this effect, a proximal one of the fin stiffening elements is arranged on the proximal surfaces of the fin, wherein the proximal surfaces of the fin stiffening element are arranged on the extruded body and wherein the proximal surfaces of the fin are arranged on the proximal surfaces of the fin stiffening element. The distal surfaces and the intermediate surfaces of the fin stiffening element are thereby arranged in between the intermediate surfaces of the fin and provide for additional stiffness to the fin in the first direction.

A distal one of the fin stiffening elements is arranged on a side of the fin that faces away from the extruded body. The distal surfaces of the fin stiffening element are thereby arranged on the distal surfaces of the fin. The proximal surfaces and the intermediate surfaces of the fin stiffening element are thereby arranged in between the intermediate surfaces of the fin and provide for additional stiffness of the fin in the first direction.

In an embodiment, the thickness of the fin stiffening elements may be larger than the thickness of the fins, such that this larger thickness of the fin stiffening elements contributes to a higher stiffness of the fin stiffening elements themselves.

In an embodiment, the extruded body comprises one or more body elements, wherein fluid channels of the body elements are fluidly connected in series. These body elements are arranged adjacent each other in the first direction and together form the extruded body. Fluid channels of multiple body elements, which are aligned with each other and fluidly connected in series, together form the fluid channels of the extruded body.

In an embodiment, depending on the amount of body elements and/or the length of fluid channels of each of the body elements, the length of the extruded body can be altered. By altering the length of the extruded body, the amount of heat transfer by the radiator between the fluid and the environment can be altered. As a result, the size and heat transfer of the radiator can be optimally adapted to the size of the room that is to be heated and/or the heating requirements of the room. Meanwhile, the amount of different components that are needed to build such radiators is relatively low, because of the modularity of the radiator.

In an embodiment, the fluid flow direction in the fluid channels alternates between adjacent channels. The fluid enters a closure element, after it has flowed through an end portion of a first fluid channel. In the closure element, the fluid is guided to a second fluid channel, which is arranged adjacent the first fluid channel. The direction of the fluid that flows in the second fluid channel is thereby opposite to the direction in which the fluid flows in the first fluid channel.

In an embodiment of the radiator, one of the closure elements comprises at least one entrance port in a top portion thereof, which are configured to provide access to a first fluid channel and through which fluid is intended to enter the radiator. The at least one entrance port may be configured to receive a piece of piping, through which a supply feed of fluid is delivered to the radiator.

The top portion of the closure element, and therefore the at least one entrance port of the closure element as well, is preferably arranged in an upper portion of the radiator, so that the fluid may enter the radiator in a top portion thereof.

In an embodiment, one of the closure elements comprises at least one exit port in a bottom portion thereof, which are configured to provide access to a last fluid channel and through which fluid is intended to leave the radiator. The at least one exit port may be configured to receive a piece of piping, through which fluid, from which heat has been delivered to the environment, is discharged from the radiator.

The bottom portion of the closure element, and therefore the at least one exit port of the closure element as well, is preferably arranged in a lower portion of the radiator, so that the fluid may exit the radiator in a lower portion thereof.

With the fluid entering the radiator in a top portion and leaving the radiator in a lower portion, a type of counterflow heat-exchanger is created. The direction of the heating fluid through the radiator, being substantially from top to bottom, is thereby in an opposite direction as compared to the direction of the heated air, which is configured to flow through the air channels in the upwards direction, from bottom to top, as a result of the natural convention.

In an embodiment, each of the at least one entrance ports and each of the at least one exit ports of the closure elements are aligned in different directions, such that a fluid passage towards the fluid channels can be provided from multiple directions. Prior to installation, all entrance and exit ports in the closure elements are closed, but a suitable one of each can be opened after installation of the radiator, when it is known from which directions the fluid feed piping and fluid discharge piping arrive to the radiator.

In case the radiator has, in an embodiment, an even number of fluid channels, the entrance port and exit port are arranged in the same closure element. The flow direction of the fluid through the extruded body thereby reverses an odd amount of times, which causes the fluid to exit the last fluid channel and the exit port in the same closure element as in which the entrance port was arranged.

In case the radiator has, in another embodiment, an odd number of fluid channels, the entrance port and exit port are arranged in different closure elements. The flow direction of the fluid through the extruded body thereby reverses an even amount of times, which causes the fluid to exit the last fluid channel and the exit port in a different closure element as in which the entrance port was arranged.

In an alternative embodiment, the extruded body comprises a compensating channel extending parallel to the fluid channels between head ends of the body. This compensating channel is configured to direct the fluid feed or the fluid discharge to an opposite head end of the body, compared to the end near which it arrives, so that, for a radiator with an odd number of fluid channels, the entrance port and the exit port can be arranged in the same closure element or that, for a radiator with an even number of fluid channels, the entrance port and the exit port can be arranged in different closure elements.

In an embodiment of the radiator, the fluid channels comprise corrugations in an interior thereof. These corrugations may be in the form of extended fins, through which the fluid is guided, or can, for example, be inner tubes which divide the fluid channels in multiple smaller channels along their longitudinal direction.

The corrugations are configured to increase the interfacial area between the radiator and the fluid. This larger interfacial area will provide for a higher amount of heat transfer between the fluid and the radiator. As a result, with a similar flow and entrance temperature of the fluid, the efficiency of the radiator is increased, compared to a radiator without corrugations.

In an embodiment, the radiator comprises a double-inlet centrifugal fan, which is arranged on the extruded body. The centrifugal fan is thereby mounted to the first channel of the extruded body. In a further embodiment, the radiator comprises multiple fans, so that the entire top of the extruded body is equipped with fans.

The fan is mounted on the extruded body such, that it, or at least projection of it in the second direction, does not substantially project past the extruded body in the third direction. As such, the fan will not be arranged above the fins, or above the elongate air channels between the fins and the extruded body, so that a flow of air, flowing substantially in the second direction, from the air channels will not be hindered by the fan.

The fan is configured induce an air flow through the air channels between the extruded body and the fins. As a result of the flow, the heat transfer is transformed from being mostly natural convention into mostly forced convection, thereby increasing the efficiency of the radiator.

In an embodiment of the radiator, the axis of rotation of the fan is parallel to the third direction. The fan thereby rotates, when the radiator is installed, preferably to a wall, in the vertical plane that is parallel to the longitudinal direction of the fluid channels.

Preferably, the fan is a double inlet fan, wherein the inlets of the fan are arranged on each side of the fan. The fan may have a single or double outlet, which is arranged in a top portion of the fan.

In an embodiment, natural convection of the radiator is not hindered by the fan. The amount of heat transfer is then not reduced by placement of the fan, but is only increased by the forced convention that additionally takes place, besides the natural convection, due to the flow induced by the fan.

In order not to reduce natural convention, the width of the fan, along the axis of rotation of it, does not substantially exceed the width of the extruded body in the same direction. In order to induce a flow that is large enough, the diameter of the fan is relatively high, compared to the width. This provides the advantage that the fan can rotate at relatively low speeds and that nuisance, possibly resulting from high fan speeds, is thus prevented.

In an embodiment, the closure elements comprise mounting brackets, with which the radiator can be suspended from a wall. Because the mounting brackets are arranged on the closure elements, the extruded body can be free of mounting brackets. As a result, a larger fraction of the side surface of the extruded body can be equipped with fins, as compared to when mounting brackets were to be mounted to the extruded body.

The mounting brackets may be configured to set the radiator at a distance from the wall, so that effective heat transfer can take place on both sides of the extruded body, without being hindered by the presence of the wall.

In an embodiment, the mounting brackets comprise a hinge mechanism, wherein at least one wall element of the casing is, after installation, configured to be rotated with the hinge mechanism along an axis of rotation that is parallel to the second direction. By rotating at least one wall element the casing, for example the wall element facing away from the wall, the fins on the extruded body that are hidden within the casing will become exposed. These fins will become accessible and can, for example, be cleaned easier as compared to when they were to be contained within the casing. Furthermore, maintenance can take place easier when the radiator were to be hinged away from the wall.

In an alternative embodiment, the radiator can be mounted to a floor or to a ceiling with the mounting brackets.

Onto the mounting brackets, in an embodiment of the radiator, various types of front-plates can be mounted. These plates serve aesthetic purposes and are arranged such that they cover a side surface of the extruded body and the fins attached thereon, such that the appearance of the radiator is improved.

In an embodiment, the radiator is adapted to cool the environment. This is achieved when the fluid entering the radiator has a lower temperature than the environment, such that heat is transported from the environment to the fluid. The fluid is thereby heated and the fluid leaving the radiator has a higher temperature than the fluid that enters the radiator. Since natural convection may not occur when the radiator is adapted to cool the environment, a fan can be provided to induce an air flow through the air channels.

In an embodiment, the extruded body has, in the plane perpendicular to the first direction, a trapezoid cross section to facilitate drainage of condensation on the body. This condensation may occur when the radiator is cooling the environment, since the saturation level for water vapour decreases with decreasing temperature. During cooling of the environment, water vapour may condense on the (cold) surface of the radiator.

To facilitate the drainage of the condensation, a bottom side of the body is, in the third direction, wider than a top side of the body. As a result, condensed water on the fins will flow towards the extruded body. A drainage channel on the bottom side of the extruded body is configured to collect and to dispose the condensate. Preferably, the drainage channel is extruded simultaneously with the extruded body.

The invention further relates to a heating system, comprising a fluid feed, a fluid discharge and a radiator according to any of the claims 1 - 16. The heating system is configured to transfer heat, by means of the radiator, between a fluid and an environment. The heating system is configured to receive fluid in the radiator through the fluid feed and configured to discharge fluid through the fluid discharge.

An embodiment of the heating system comprises two or more radiators, wherein the radiators are arranged above each other in the second direction. The fluid feed is diverted into two or more radiator feeds, each configured to feed the fluid to one of the radiators, and two or more radiator discharges, each configured to discharge fluid from one of the radiators, are combined into the fluid discharge. Each of the radiator has, within its casing a free channel for heated air to flow in order to achieve the chimney effect.

In an embodiment, an air inlet of the casing of an upper radiator is arranged above an air outlet of the casing of a lower radiator, wherein the air inlets are preferably arranged in a side-wall element of the casing and wherein the air outlets are preferably arranged in a front-wall element of the casing. The front-wall element thereby is the wall element of the casing that faces away from the wall, from which the radiators are suspended, and the side-wall elements are the wall element of the casing that are perpendicular to the front-wall element. Preferably, the air outlets of each of the radiator are arranged above its fins at a distance between 30 cm to 60 cm.

In an embodiment of the heating system, the difference in temperature between the fluid feed and the environment is no more than 45°C, preferably no more than 35°C and more preferably no more than 20°C. This low difference in temperature provides for a more efficient operation of the heating system, as compared to heating systems in which the temperature difference is higher.

In an embodiment, the temperature of the fluid from the fluid feed is higher than the temperature of the environment, such that heat is transferred by the radiator from the fluid to the environment. As a result, the temperature of the environment is increased.

In an alternative embodiment, the temperature of the fluid from the fluid feed is lower than the temperature of the environment, such that heat is transferred by the radiator from the environment to the fluid. As a result, the temperature of the environment is decreased.

The invention further relates to a climate system, comprising at least one radiator according to any of the claims 1 - 16. The climate system is configured to regulate the climate in a chamber by means of heating or cooling the chamber with the at least one radiator.

In an embodiment, the climate system comprises a control device with which the temperature of the chamber is monitored and with which, depending on the temperature of the chamber, the temperature of a fluid, entering the at least one radiator, can be controlled. As such, the temperature of the chamber can, upon request of a user, be maintained at a certain level.

In an embodiment, the at least one radiator comprises a fan, with which a flow is generated past fins of the radiator, such that the amount of heat transfer is increased, while the temperature of the fluid feed is maintained at the same level.

The invention further relates to a method for manufacturing a radiator according any of the claims 1 - 16, comprising the steps of:
- providing an extruded body, two closure elements and two fins,
- arranging each of the two closure elements on a respective head end of the body,
- arranging each of the fins on a respective side of the extruded body, and
- applying a heat treatment to the radiator in a brazing oven, in order to fixedly interconnect the extruded body, the closure elements and the fins.

With the method according to the invention, the radiator can be manufactured faster than prior art radiators, because the individual parts are mounted, or brazed, together in a single, enabling the radiator to be manufactured in a smaller amount of time, and therefore at reduced costs.

In an embodiment, the method comprises, before the step of arranging each of the fins, the step of arranging a fin stiffening element on each of the respective sides of the extruded body. Thereafter, the fins are arranged on the fin stiffening elements, such that the proximal surfaces of the fins are arranged on the proximal surfaces of the fin stiffening element. The fin stiffening elements are thereby configured to provide additional stiffness to the fins, in order to prevent deformation of the fins during the heat treatment in the brazing oven.

In a further embodiment, the method comprises, before the step of arranging each of the fins, the step of arranging a fin stiffening element on the distal surfaces of the fin. The distal surfaces of the fin stiffening element are arranged on the distal surfaces of the fin. These distal fin stiffening elements are configured to provide additional stiffness to the fins near their distal surfaces, in order to prevent deformation of the fins during heat treatment in the brazing oven.

An embodiment of a radiator according to the invention will now be described in further detail, by way of example only, with reference to the accompanying drawings, in which:
Figure 1 shows, in perspective view, an embodiment of a radiator according to the invention;
Figure 2 shows, in perspective view, an embodiment of a radiator according to the invention, with a casing of the radiator removed;
Figure 3 shows, in perspective view, and exploded-view image of the radiator;
Figure 4 shows a cross sectional view on the extruded body and the closure elements of the radiator;
Figure 5 schematically shows an embodiment of a heating system according to the invention; and
Figure 6 schematically shows an embodiment of a climate system according to the invention.

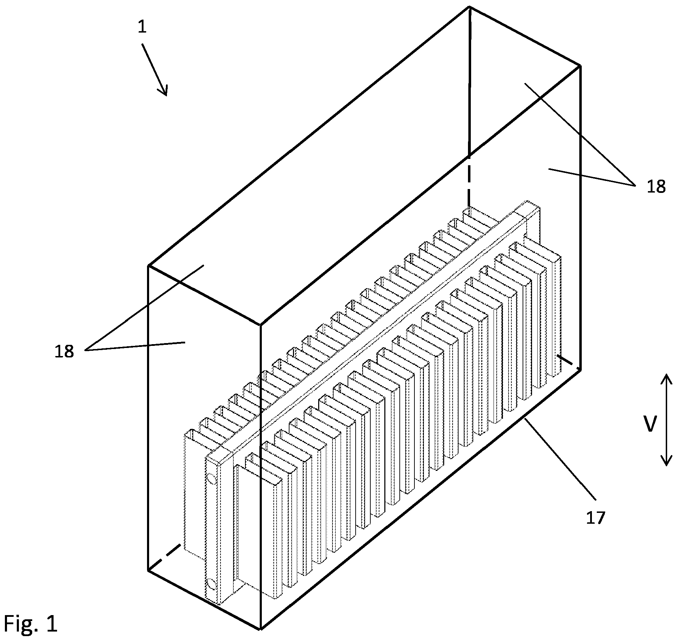

Figure 1 shows an embodiment of a radiator according to the invention in perspective view. The radiator 1 is configured to transfer heat between a fluid in an interior thereof and a surrounding environment.

The radiator 1 comprises a casing 17, which forms an outer contour of the radiator 1. In the embodiment, the casing 17 comprises four wall elements 18, which extend parallel to a vertical direction (V). The wall elements 18 together form a rectangular sleeve, providing a channel through which an air flow parallel to the vertical direction (V) is intended to flow.

In the embodiment, the casing 17 does not contain a wall element that is perpendicular to the vertical direction (V). In an alternative embodiment, the casing may comprise one or more non-vertical wall elements, with which the air flow may be guided in a direction that is not substantially parallel to the vertical direction.

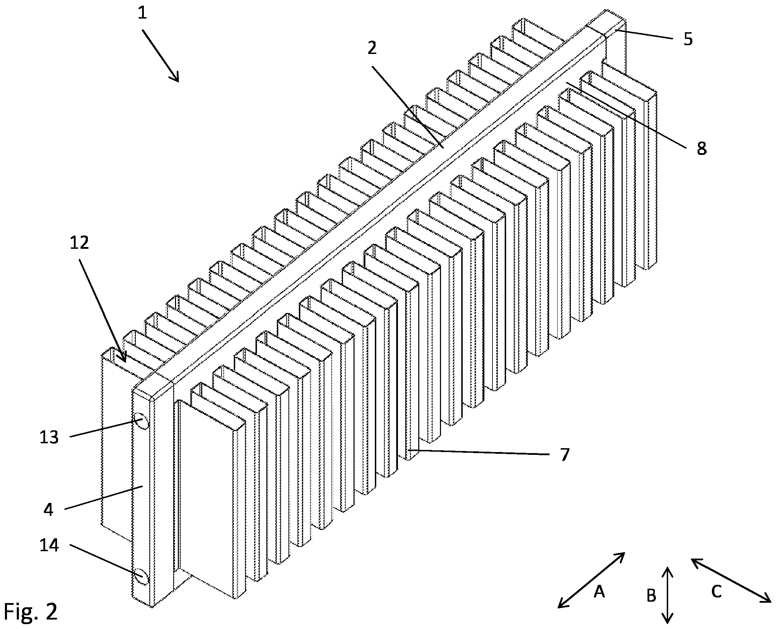

Figure 2 shows the radiator 1 with the casing 17 removed. The radiator 1 comprises an extruded body 2, which is made of aluminium. In alternative embodiments, the extruded body may be made of a different material that is both suitable to be extruded and that has heat conduction properties that are sufficient for the use in a radiator according to the invention.

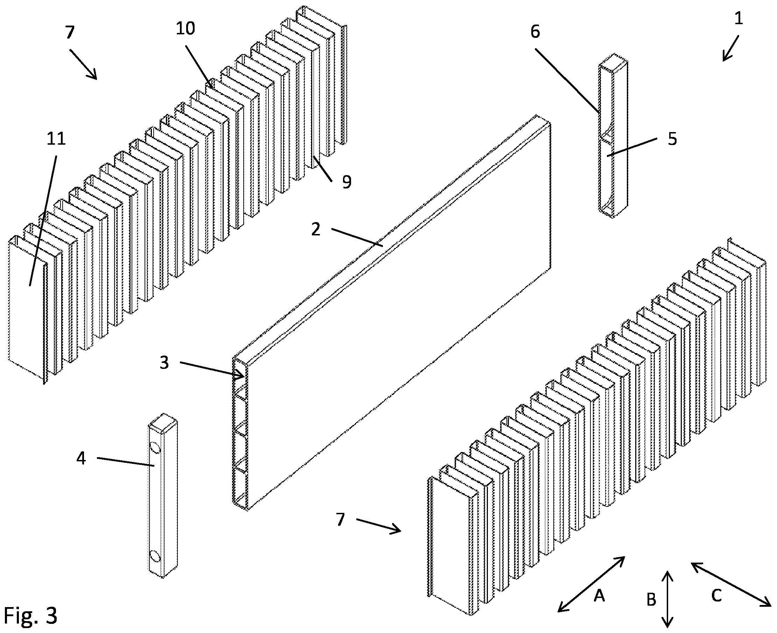

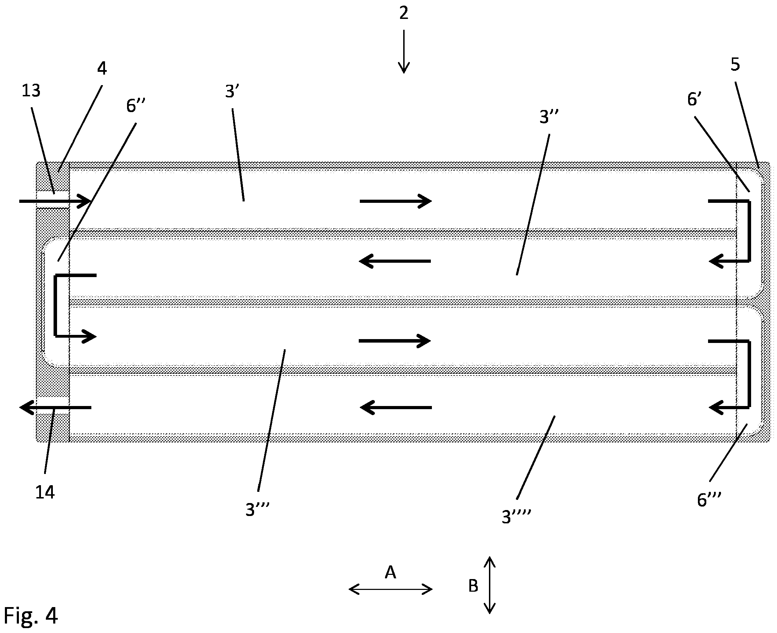

The extruded body 2 comprises four fluid channels 3, which are arranged in an interior of the extruded body 2 and are visible in figures 3 and 4. A flow direction of the fluid through the fluid channels 3 substantially extends in a first direction (A), which is a horizontal direction.

The entire extruded body 2 is fabricated means of extrusion along the first direction (A). An extrusion mould that is used for the extrusion of the body 2 therefore contains all features of the body 2 in a plane that is perpendicular to the first direction (A).

The radiator 1 comprises two closure elements 4,5, which are sealingly mounted against head ends of the extruded body 2 and of the fluid channels 3. The closure elements 4,5 substantially extend in a second direction (B), which is the vertical direction. The closure elements 4,5 are configured to seal of the fluid channels 3 of the extruded body 2 so that no fluid, which flows through the radiator 1, can leak to the environment.

The closure elements 4,5 form connection channels 6, which are configured to connect adjacent fluid channels 3. As such, one fluid path is created for the fluid to flow through the radiator 1, wherein the fluid path is composed of all fluid channels 3 connected in series buy the connection channels 6. The fluid flows through the radiator 1 in a zigzag-like manner, since the flow direction of the fluid, parallel to the first direction (A), reverses upon each pass through a connection channel 6.

The radiator 1 further comprises fins 7, which are mounted on sides 8 of the extruded body 2 and are configured to increase the interfacial area between the radiator 1 and the environment. In the embodiment, the fins 7 were not extruded together with the extruded body 2, but were mounted to the body 2 after the body 2 had been extruded.

The fins 7 are formed of thin sheets of metal as is best seen in figure 3. In the embodiment, the fins 7 are made of aluminium, but in alternative embodiments, other metals, such as copper or plain carbon steel may be used.

The sheets of the fins 7 are folded in a serpentine matter, such that the fins 7 comprise proximal surfaces 9, which extend parallel to the sides 8 of the extruded body 2 and with which the fins 7 are configured to be mounted to the body 2, distal surfaces 10, which are parallel to the proximal surfaces 9 and are distally set away from the proximal surfaces 9, and intermediate surfaces 11, which extend between the proximal surfaces 9 and the distal surfaces 10 under right angles with those.

In alternative embodiments, the intermediate surfaces may be under an angle, not being 90°, with the proximal surfaces and the distal surfaces.

The fins 7 form elongate air channels 12, which are defined between the surfaces 9, 10, and 11 of the fins 7. The elongate air channels 12 extend in the vertical direction, such that an air flow through the air channels 12 substantially is in the vertical direction. In the horizontal plane, the air channels 12 have a rectangular cross section.

In alternative embodiments, there may be non-right angles between the surfaces of the fins. In these embodiments, the air channels may have a trapezoidal cross section.

In the embodiment, the fins 7 are brazed to the extruded body 2. The advantage of brazing the fins 7 to the body 2 is that a brazed connection, as opposed to a welded connection, can be used to join dissimilar metals. To provide for sufficient heat transport from the body 2 to the fins 7, the proximal surfaces 9 of the fins 7 are brazed to the sides 8 of the body 2, such that conductive heat transport may take place through the brazed connection.

In alternative embodiments, however, the fins may be mounted to the body by means of welding. The proximal surfaces are thereby fused to sides of the body by means of welding, in order to achieve a sufficient amount of interfacial area between the fins and the body. A condition for welding is however that the material of the fins must be substantially similar, such as both being made of aluminium, whereas the alloy is different between the body and the fins.

In the embodiment, a first closure element 4 of the radiator 1 comprises an entrance port 13. The entrance port 13 is arranged in a top portion of the first closure element 4 and provides a through connection between a first of the fluid channels 3 and the environment. The entrance port 13 is configured to receive a piece of piping, through which fluid is supplied to the radiator 1. The fluid is thereby configured to enter the radiator 1, in particular the first one of the fluid channels 3, through the entrance port 13.

In an alternative embodiment, the radiator may comprise a valve, with which the entrance port can be closed, such that no fluid can enter the radiator. Alternatively, the valve can be a thermostat valve, with which the fluid flow can be regulated in order to adapt the amount of heat that will be transferred between the radiator and the environment.

Furthermore, an entrance port in another embodiment of the radiator may comprise a vent valve, with which air that is trapped in the radiator can be drained from the radiator.

The first closure element 4 further comprises an exit port 14. The exit port 14 is arranged in a bottom portion of the first closure element 4 and provides a through connection between the environment and a fourth and last one of the fluid channels 3. The exit port 14 is configured to receive a piece of piping, through which fluid is discharged from the radiator 1, after heat has been transferred in the radiator 1 from the fluid to the environment. The fluid is thereby intended to leave the radiator 1, in particular the fourth and last one of the fluid channels 3, through the exit port 14.

In figure 3, an exploded-view image of the radiator 1 is shown in perspective view. The extruded body 2 is, after extrusion, cut to length in the first direction (A) that optimally suits the heating needs of the chamber. An advantage thereof is that bodies can be extruded to one length, or at least to a limited amount of lengths, to decrease the fabrication costs of the extruded body.

The extruded body 2 is extruded along the first direction (A), so that the mould that is used for the extrusion of the body 2 comprises all features of the body 2 in the plane perpendicular to the first direction (A).

In figure 4, a cross-section of the radiator 1, along the plane parallel to the first direction (A) and the second direction (B), is schematically depicted. The flow path of the fluid through the radiator 1 is indicated by arrows.

The extruded body 2 comprises four fluid channels 3, which are aligned such, that a flow direction of the fluid through the fluid channels 3 is substantially parallel to the first direction (A). The fluid channels 3 are disposed adjacent each other in the second direction (B). The first closure element 4 and the second closure element 5 are arranged at head ends of the extruded body 2. The closure elements 4,5 form connection channels 6, with which adjacent fluid channels 3 are connected in series.

The fluid is intended to enter the radiator 1 through the entrance port 13, after which it flows through an upper-most fluid channel 3'. In the second closure element 5, a first connection channel 6' is arranged, through which the fluid passes towards a second fluid channel 3". The flow direction through the second fluid channel 3" is in opposite direction as compared to the flow direction in the upper-most fluid channel 3'. From the second fluid channel 3", the fluid flows through a second connection channel 6" in the first closure element 4, a third fluid channel 3"', a third connection channel 6''' in the second closure element 5 and through a lower fluid channel 3"", after which the fluid is discharged from the radiator 1 through the exit port 14.

In the embodiment, the closure elements 4,5 are made of aluminium, just as the extruded body 2. This provides the advantage that there will be no difference in thermal expansion between them and therefore no build-up of thermal stresses upon a change in temperature of the closure elements 4,5 and the body 2.

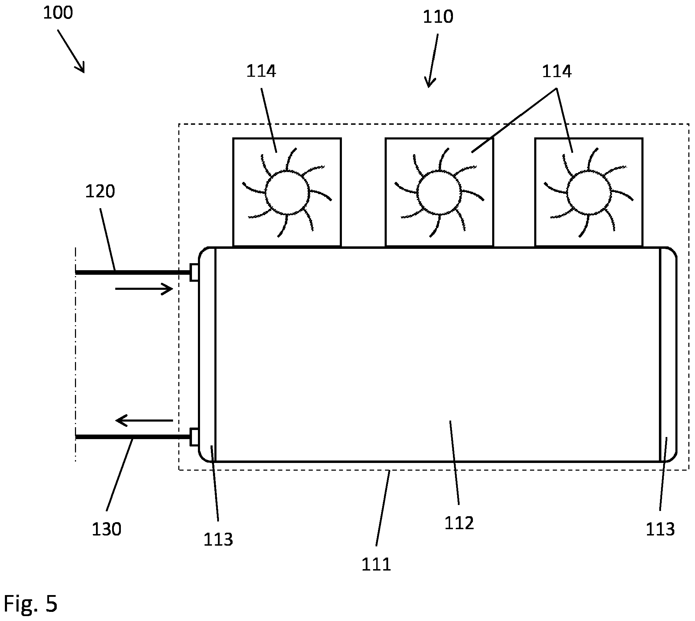

In figure 5, a heating system 100 according to the invention is schematically depicted. The heating system 100 comprises a radiator 110 according to the invention, a fluid feed 120 and a fluid discharge 130.

The radiator 110 comprises a casing 111, an extruded body 112, closure elements 113 and centrifugal fans 114, which are arranged on the extruded body 112 and are configured to induce an air flow past the extruded body 112.

In the embodiment, the fluid that is delivered to the radiator 110 by the fluid feed 120 has a higher temperature than the temperature of the environment. As a result, the environment will be heated by the radiator 101. After the fluid has been cooled in the radiator 101 and the heat of the fluid has been transferred to the environment, the fluid is discharged from the radiator 110 through the fluid discharge 130, after which it can be heated again.

In an alternative embodiment, the fluid that is delivered to the radiator by the fluid feed has a lower temperature than the temperature of the environment, causing that the environment will be cooled by the radiator.

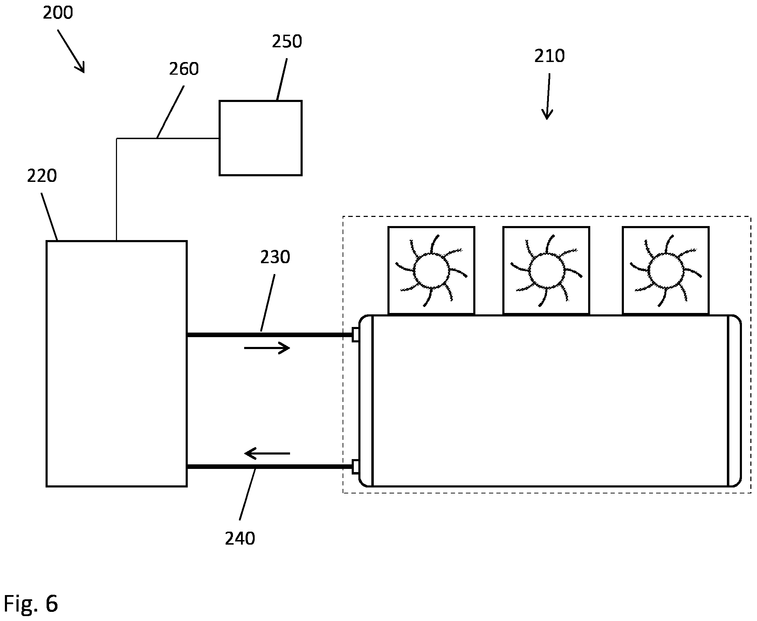

In figure 6, an embodiment of a climate system 200 is schematically depicted. The climate system 200 comprises a radiator 210 according to the invention, a boiler device 220, a fluid feed 230, a fluid discharge 240 and a control device 250.

The climate system 200 is, at least partly, placed in a chamber and is configured to regulate the climate in the chamber. Thereto, the control device 250 is configured to measure the temperature in the chamber and is, based on the measured temperature, configured to control the boiler device 220 in which a heating fluid can be heated or cooled.

The system 200 is configured to transport the fluid through the fluid feed 230 towards the radiator 210, with which heat is transferred between the fluid and the environment in the chamber. After the transfer of heat, the fluid is transported from the radiator 210 towards the boiler device 220 through the fluid discharge 240.

The climate system 200 is configured to heat or to cool the chamber, depending on what is demanded by a user. With the control device 250, a desired temperature can be selected by the user, after which the control device 250 is configured to send a signal to the boiler device 220 through cable 260. Based on the signal, the boiler device 220 is configured to adapt the temperature of the fluid and will transport the fluid through the fluid feed 230 to the radiator 210.

A type of feedback-loop is created, since the control device 250 is configured to repeatedly measure the temperature of the chamber and to repeatedly send the signal towards the boiler device 220.

## Claims

1. A radiator, configured to transfer heat between a fluid in an interior thereof and a surrounding environment, wherein the radiator comprises:
- an extruded body, comprising at least four fluid channels therein, of which a fluid flow direction substantially extends in a first direction and wherein the fluid channels are disposed adjacent each other in a second direction, which is perpendicular to the first direction;
- two closure elements, sealingly mounted against head ends of the extruded body and of the fluid channels;
- fins on sides of the extruded body to form elongate air channels, wherein the fins are configured to increase the interfacial area between the radiator and the environment; and
- a casing comprising multiple wall elements which extend in the second direction, wherein the casing is configured to increase the draft of air through the air channels,
**characterized in that** the closure elements form connection channels, which are configured to fluidly connect adjacent fluid channels in series and **in that** an air flow direction through the air channels extends in the second direction.

2. Radiator according to claim 1, wherein, after installation of the radiator, the first direction extends horizontally and the second direction extends vertically,
wherein preferably at least a part of the wall elements of the casing project, after installation of the radiator, substantially above the extruded body.

3. Radiator according to any of the preceding claims, wherein one of the closure elements comprises at least one entrance port in a top portion thereof, which is configured to provide access to a first fluid channel and through which fluid is intended to enter the radiator, and/or
wherein one of the closure elements comprises at least one exit port in a bottom portion thereof, which is configured to provide access to a last fluid channel and through which fluid is intended to leave the radiator
wherein each of the at least one entrance ports and/or each of the at least one exit ports of the closure elements are preferably aligned in different directions, such that a fluid passage towards the fluid channels can be provided from multiple directions.

4. Radiator according to any of the preceding claims, wherein the extruded body comprises a compensating channel extending parallel to the fluid channels between head ends of the body, which is configured to direct the fluid feed or the fluid discharge to an opposite head end of the body, and/or
wherein the fluid channels comprise corrugations in an interior thereof, which are configured to increase the interfacial area between the radiator and the fluid.

5. Radiator according to any of the preceding claims, comprising a double-inlet centrifugal fan, which is arranged on the extruded body and does not extend past the extruded body in a third direction, perpendicular to the first and second direction, wherein the fan is configured to induce an air flow through the air channels,
wherein an axis of rotation of the fan is preferably parallel to the third direction.

6. Radiator according to claim 5, wherein forced convective heat transfer between the radiator and the environment is induced by the fan and wherein natural convection of the radiator is not obstructed by the fan,
wherein the fan is preferably arranged within the casing.

7. Radiator according to any of the preceding claims, wherein the closure elements comprise mounting brackets, with which the radiator can be suspended from a wall,
wherein the mounting brackets may comprise a hinge mechanism, wherein at least one wall element of the casing may, after installation, be configured to be rotated with the hinge mechanism along an axis of rotation that is parallel to the second direction.

8. Radiator according to any of the preceding claims, wherein the extruded body has, in the plane perpendicular to the first direction, a trapezoid cross section to facilitate drainage of condensation on the body.

9. Radiator according to any of the preceding claims, wherein the radiator has a weight-to-heat-output-ratio between 10 - 12.5 kg per kW.

10. Radiator according to any of the preceding claims, wherein the fins are provided with fin stiffening elements, which are configured to provide additional stiffness to the fins and to secure a spacing between intermediate surfaces of the fins, wherein a proximal one of the fin stiffening elements is arranged on proximal surfaces of the fin and wherein a distal one of the fin stiffening elements is arranged on a side of the fin that faces away from the extruded body.

11. Heating system, comprising a fluid feed, a fluid discharge and at least one radiator according to any of the preceding claims.

12. Heating system according to claim 11, comprising two or more radiators, wherein the radiators are disposed above each other, wherein the fluid feed is diverted into two or more radiator feeds, each configured to feed the fluid to one of the radiators, and wherein two or more radiator discharges, each configured to discharge fluid from one of the radiators, are combined into the fluid discharge,
wherein an air inlet of the casing of an upper radiator may be arranged above an air outlet of the casing of a lower radiator, wherein the air inlets are preferably arranged in a side-wall element of the casing and wherein the air outlets are preferably arranged in a front-wall element of the casing.

13. Heating system according to claim 11 or 12, wherein the temperature of the fluid from the fluid feed is higher than the temperature of the environment, such that heat is transferred by the radiator from the fluid to the environment, such that the temperature of the environment is increased, or
wherein the temperature of the fluid from the fluid feed is lower than the temperature of the environment, such that heat is transferred by the radiator from the environment to the fluid, such that the temperature of the environment is decreased,
wherein the difference in temperature between the fluid feed and the environment may be no more than 45°C, preferably no more than 35°C and more preferably no more than 20°C.

14. Climate system, comprising at least one radiator according to any of the claims 1-10, wherein the climate system is configured to regulate the climate in a chamber by means of heating or cooling the chamber with the at least one radiator.

15. Method for manufacturing a radiator according any of the claims 1 - 10, comprising the steps of:
- providing an extruded body, two closure elements and two fins,
- arranging each of the two closure elements on a respective head end of the body,
- arranging each of the fins on a respective side of the extruded body, and
- applying a heat treatment to the radiator in a brazing oven, in order to fixedly interconnect the extruded body, the closure elements and the fins, and optionally
further comprising, before step of arranging each of the fins on a respective side of the extruded body, the steps of:
- arranging a fin stiffening element on each of the respective sides of the extruded body, and
- arranging a fin stiffening element on the distal surfaces on each of the fins.

## Patentansprüche

1. Radiator, welcher ausgestaltet ist, um eine Wärme zwischen einem Fluid in einem Inneren davon und einer umgebenden Umgebung zu übertragen, wobei der Radiator umfasst:
- einen extrudierten Körper, welcher mindestens vier Fluidkanäle darin umfasst, von welchen sich eine Fluidstromrichtung im Wesentlichen in eine erste Richtung erstreckt, und wobei die Fluidkanäle in einer zweiten Richtung, welche senkrecht zu der ersten Richtung ist, nebeneinander angeordnet sind;
- zwei Verschlusselemente, welche abdichtend an Kopfenden des extrudierten Körpers und der Fluidkanäle angebracht sind;
- Finnen auf Seiten des extrudierten Körpers, um längliche Luftkanäle auszubilden, wobei die Finnen ausgestaltet sind, um die Grenzfläche zwischen dem Radiator und der Umgebung zu vergrößern; und
- ein Gehäuse, welches mehrere Wandelemente umfasst, welche sich in der zweiten Richtung erstrecken, wobei das Gehäuse ausgestaltet ist, um einen Durchzug von Luft durch die Luftkanäle zu vergrößern,
**dadurch gekennzeichnet, dass** die Verschlusselemente Verbindungskanäle ausbilden, welche ausgestaltet sind, um strömungstechnisch benachbarte Fluidkanäle in Reihe zu verbinden, und dass sich eine Luftstromrichtung durch die Luftkanäle in der zweiten Richtung erstreckt.

2. Radiator nach Anspruch 1, wobei sich nach einer Installation des Radiators die erste Richtung horizontal und die zweite Richtung vertikal erstrecken,
wobei vorzugsweise zumindest ein Teil der Wandelemente des Gehäuses nach der Installation des Radiators im Wesentlichen über den extrudierten Körper ragt.

3. Radiator nach einem der vorhergehenden Ansprüche, wobei eines der Verschlusselemente zumindest einen Eingangsanschluss in einem oberen Abschnitt davon umfasst, welcher ausgestaltet ist, um einen Zugang zu einem ersten Fluidkanal bereitzustellen und welcher dafür bestimmt ist, dass dort hindurch ein Fluid in den Radiator eindringt, und/oder
wobei eines der Verschlusselemente zumindest einen Ausgangsanschluss in einem unteren Abschnitt davon umfasst, welcher ausgestaltet ist, um einen Zugang zu einem letzten Fluidkanal bereitzustellen und welcher dafür bestimmt ist, dass dort hindurch ein Fluid den Radiator verlässt,
wobei der mindestens eine Eingangsanschluss und/oder der mindestens eine Ausgangsanschluss der Verschlusselemente jeweils vorzugsweise in unterschiedlichen Richtungen ausgerichtet sind, so dass ein Fluiddurchgang zu den Fluidkanälen von mehreren Richtungen bereitgestellt werden kann.

4. Radiator nach einem der vorhergehenden Ansprüche, wobei der extrudierte Körper einen Ausgleichskanal umfasst, welcher sich parallel zu den Fluidkanälen zwischen Kopfenden des Körpers erstreckt und welcher ausgestaltet ist, um die Fluidzuführung oder die Fluidabführung zu einem gegenüberliegenden Kopfende des Körpers zu leiten, und/oder
wobei die Fluidkanäle Wellungen in einem Inneren davon umfassen, welche ausgestaltet sind, um die Grenzfläche zwischen dem Radiator und dem Fluid zu vergrößern.

5. Radiator nach einem der vorhergehenden Ansprüche, welcher einen Zentrifugallüfter mit doppeltem Einlass umfasst, welcher auf dem extrudierten Körper angeordnet ist und sich in einer dritten Richtung, welche senkrecht zu der ersten und der zweiten Richtung ist, nicht hinter den extrudierten Körper erstreckt, wobei der Lüfter ausgestaltet ist, um einen Luftstrom durch die Luftkanäle herbeizuführen, wobei eine Rotationsachse des Lüfters vorzugsweise parallel zu der dritten Richtung ist.

6. Radiator nach Anspruch 5, wobei die erzwungene konvektive Wärmeübertragung zwischen dem Radiator und der Umgebung durch den Lüfter herbeigeführt wird, und wobei eine natürliche Konvektion des Radiators nicht durch den Lüfter behindert wird,
wobei der Lüfter vorzugsweise in dem Gehäuse angeordnet ist.

7. Radiator nach einem der vorhergehenden Ansprüche, wobei die Verschlusselemente Montagehalterungen umfassen, mit welchen der Radiator von einer Wand hängen kann,
wobei die Montagehalterungen einen Gelenkmechanismus umfassen, wobei zumindest ein Wandelement des Gehäuses nach einer Installation ausgestaltet sein kann, um sich mittels des Gelenkmechanismus entlang einer Rotationsachse, welche parallel zu der zweiten Richtung ist, zu drehen.

8. Radiator nach einem der vorhergehenden Ansprüche, wobei der extrudierte Körper in der Ebene senkrecht zu der ersten Richtung einen trapezförmigen Querschnitt aufweist, um einen Abfluss eines Kondensats auf dem Körper zu ermöglichen.

9. Radiator nach einem der vorhergehenden Ansprüche, wobei der Radiator ein Gewicht-zu-Wärmeausgangs-Verhältnis zwischen 10 - 12,5 kg pro kW aufweist.

10. Radiator nach einem der vorhergehenden Ansprüche, wobei die Finnen mit Finnenversteifungselementen versehen sind, welche ausgestaltet sind, um für eine zusätzliche Steifigkeit für die Finnen zu sorgen und einen Abstand zwischen Zwischenoberflächen der Finnen sicherzustellen, wobei ein proximales Element der Finnenversteifungselemente auf proximalen Oberflächen der Finne angeordnet ist und wobei ein distales Element der Finnenversteifungselemente auf einer Seite der Finne, welche von dem extrudierten Körper weg gerichtet ist, angeordnet ist.

11. Heizungssystem, welches eine Fluidzuführung, eine Fluidabführung und mindestens einen Radiator nach einem der vorhergehenden Ansprüche umfasst.

12. Heizungssystem nach Anspruch 11, welches zwei oder mehrere Radiatoren umfasst, wobei die Radiatoren übereinander angeordnet sind, wobei die Fluidzuführung in zwei oder mehr Radiatorzuführungen aufgeteilt ist, welche jeweils ausgestaltet sind, um das Fluid zu einem der Radiatoren zuzuführen, und wobei zwei oder mehr Radiatorabführungen in der Fluidabführung kombiniert sind, welche jeweils ausgestaltet sind, um das Fluid von einem der Radiatoren abzuführen,
wobei ein Lufteinlass des Gehäuses eines oberen Radiators über einem Luftauslass des Gehäuses eines unteren Radiators angeordnet sein kann, wobei die Lufteinlässe vorzugsweise in einem Seitenwandelement des Gehäuses angeordnet sind und wobei die Luftauslässe vorzugsweise in einem vorderen Wandelement des Gehäuses angeordnet sind.

13. Heizungssystem nach Anspruch 11 oder 12, wobei die Temperatur des Fluids von der Fluidzuführung höher als die Temperatur der Umgebung ist, so dass eine Wärme durch den Radiator von dem Fluid zu der Umgebung übertragen wird, so dass die Temperatur der Umgebung erhöht wird, oder
wobei die Temperatur des Fluids von der Fluidzuführung tiefer als die Temperatur der Umgebung ist, so dass eine Wärme durch den Radiator von der Umgebung zu dem Fluid übertragen wird, so dass die Temperatur der Umgebung verringert wird, wobei die Differenz bezüglich einer Temperatur zwischen der Fluidzuführung und der Umgebung nicht mehr als 45° C, vorzugsweise nicht mehr als 35° C und besser nicht mehr als 20° C beträgt.

14. Klimasystem, welches mindestens einen Radiator nach einem der Ansprüche 1 - 10 umfasst, wobei das Klimasystem ausgestaltet ist, um das Klima in einer Kammer mittels eines Erwärmens oder Kühlens der Kammer mit dem mindestens einen Radiator zu regulieren.

15. Verfahren zum Herstellen eines Radiators nach einem der Ansprüche 1 - 10, welches die Schritte umfasst:
- Bereitstellen von einem extrudierten Körper, zwei Verschlusselementen und zwei Finnen,
- Anordnen von jedem der zwei Verschlusselemente auf einem entsprechenden Kopfende des Körpers,
- Anordnen von jeder der Finnen auf einer entsprechenden Seite des extrudierten Körpers, und
- Anwenden einer Hitzebehandlung bezüglich des Radiators in einem Lötofen, um den extrudierten Körper, die Verschlusselemente und die Finnen fest zu verbinden, und optional darüber hinaus umfassend vor dem Schritt des Anordnens jeder der Finnen auf einer entsprechenden Seite des extrudierten Körpers die Schritte:
- Anordnen eines Finnenversteifungselements auf jeder der entsprechenden Seiten des extrudierten Körpers, und
- Anordnen eines Finnenversteifungselements auf den distalen Oberflächen von jeder der Finnen.

## Revendications

1. Radiateur configuré pour transférer la chaleur entre un fluide dans son intérieur et un environnement, dans lequel le radiateur comprend :
un corps extrudé comprenant au moins quatre canaux de fluide à l'intérieur de ce dernier, dont une direction d'écoulement de fluide s'étend sensiblement dans une première direction et dans lequel les canaux de fluide sont disposés de manière adjacente entre eux dans une deuxième direction qui est perpendiculaire à la première direction ;
deux éléments de fermeture montés de manière étanche contre les extrémités de tête du corps extrudé et des canaux de fluide ;
des ailettes sur les côtés du corps extrudé afin de former des canaux d'air allongés, dans lequel les ailettes sont configurées pour augmenter la zone interfaciale entre le radiateur et l'environnement ; et
un boîtier comprenant plusieurs éléments de paroi qui s'étendent dans la deuxième direction, dans lequel le boîtier est configuré pour augmenter le courant d'air à travers les canaux d'air,
**caractérisé en ce que** les éléments de fermeture forment des canaux de raccordement qui sont configurés pour raccorder de manière fluidique les canaux de fluide adjacents en série et **en ce qu'**une direction d'écoulement d'air à travers les canaux d'air s'étend dans la deuxième direction.

2. Radiateur selon la revendication 1, dans lequel, après l'installation du radiateur, la première direction s'étend horizontalement et la deuxième direction s'étend verticalement,
dans lequel de préférence au moins une partie des éléments de paroi du boîtier font saillie, après l'installation du radiateur, sensiblement au-dessus du corps extrudé.

3. Radiateur selon l'une quelconque des revendications précédentes, dans lequel l'un des éléments de fermeture comprend au moins un orifice d'entrée dans sa partie supérieure, qui est configuré pour fournir l'accès à un premier canal de fluide et à travers lequel le fluide est prévu pour entrer dans le radiateur, et/ou
dans lequel l'un des éléments de fermeture comprend au moins un orifice de sortie dans sa partie inférieure, qui est configuré pour fournir l'accès à un dernier canal de fluide et à travers lequel le fluide est prévu pour sortir du radiateur,
dans lequel chacun d'au moins un orifice d'entrée et/ou chacun d'au moins un orifice de sortie des éléments de fermeture sont de préférence alignés dans des directions différentes, de sorte qu'un passage de fluide vers les canaux de fluide peut être prévu à partir de plusieurs directions.

4. Radiateur selon l'une quelconque des revendications précédentes, dans lequel le corps extrudé comprend un canal de compensation s'étendant parallèlement aux canaux de fluide entre les extrémités de tête du corps, qui est configuré pour diriger l'alimentation de fluide ou la décharge de fluide vers une extrémité de tête opposée du corps, et/ou
dans lequel les canaux de fluide comprennent des ondulations dans leur intérieur, qui sont configurées pour augmenter la zone interfaciale entre le radiateur et le fluide.

5. Radiateur selon l'une quelconque des revendications précédentes, comprenant un ventilateur centrifuge à double entrée qui est agencé sur le corps extrudé et ne s'étend pas au-delà du corps extrudé dans une troisième direction, perpendiculaire aux première et deuxième directions, dans lequel le ventilateur est configuré pour induire un écoulement d'air à travers les canaux d'air,
dans lequel un axe de rotation du ventilateur est de préférence parallèle à la troisième direction.

6. Radiateur selon la revendication 5, dans lequel le transfert de chaleur par convection forcée entre le radiateur et l'environnement est induit par le ventilateur et dans lequel la convection naturelle du radiateur n'est pas obstruée par le ventilateur,
dans lequel le ventilateur est de préférence agencé à l'intérieur du boîtier.

7. Radiateur selon l'une quelconque des revendications précédentes, dans lequel les éléments de fermeture comprennent des supports de montage avec lesquels le radiateur peut être suspendu à une paroi,
dans lequel les supports de montage peuvent comprendre un mécanisme de charnière, dans lequel au moins un élément de paroi du boîtier peut, après l'installation, être configuré pour être entraîné en rotation avec le mécanisme de charnière le long d'un axe de rotation qui est parallèle à la deuxième direction.

8. Radiateur selon l'une quelconque des revendications précédentes, dans lequel le corps extrudé a, dans le plan perpendiculaire à la première direction, une section transversale trapézoïdale afin de faciliter le drainage de la condensation sur le corps.

9. Radiateur selon l'une quelconque des revendications précédentes, dans lequel le radiateur a un rapport de poids sur sortie de chaleur entre 10 et 12,5 Kg par kW.

10. Radiateur selon l'une quelconque des revendications précédentes, dans lequel les ailettes sont prévues avec des éléments de raidissement d'ailette qui sont configurés pour fournir la rigidité supplémentaire aux ailettes et pour fixer un espacement entre des surfaces intermédiaires des ailettes, dans lequel un élément proximal des éléments de raidissement d'ailette est agencé sur les surfaces proximales de l'ailette et dans lequel un élément distal des éléments de raidissement d'ailette est agencé sur un côté de l'ailette qui est orienté à l'opposé du corps extrudé.

11. Système de chauffage comprenant une alimentation de fluide, une décharge de fluide et au moins un radiateur selon l'une quelconque des revendications précédentes.

12. Système de chauffage selon la revendication 11, comprenant deux ou plusieurs radiateurs, dans lequel les radiateurs sont disposés les uns au-dessus des autres, dans lequel l'alimentation de fluide est déviée en deux ou plusieurs alimentations de radiateur, chacune configurée pour amener le fluide à l'un des radiateurs, et dans lequel deux décharges de radiateur ou plus, chacune configurée pour décharger le fluide de l'un des radiateurs, sont combinées dans la décharge de fluide,
dans lequel une entrée d'air du boîtier d'un radiateur supérieur peut être agencée au-dessus d'une sortie d'air du boîtier d'un radiateur inférieur, dans lequel les entrées d'air sont de préférence agencées dans un élément de paroi latérale du boîtier et dans lequel les sorties d'air sont de préférence agencées dans un élément de paroi avant du boîtier.

13. Système de chauffage selon la revendication 11 ou 12, dans lequel la température du fluide de l'alimentation de fluide est supérieure à la température de l'environnement, de sorte que la chaleur est transférée par le radiateur, du fluide à l'environnement, de sorte que la température de l'environnement est augmentée, ou bien
dans lequel la température du fluide de l'alimentation de fluide est inférieure à la température de l'environnement, de sorte que la chaleur est transférée par le radiateur, de l'environnement au fluide, de sorte que la température de l'environnement est diminuée,
dans lequel la différence de température entre l'alimentation de fluide et l'environnement peut être non supérieure à 45°C, de préférence non supérieure à 35°C et encore de préférence non supérieure à 20°C.

14. Système de climatisation comprenant au moins un radiateur selon l'une quelconque des revendications 1 à 10, dans lequel le système de climatisation est configuré pour réguler la climatisation dans une chambre en chauffant ou en refroidissant la chambre avec le au moins un radiateur.

15. Procédé pour fabriquer un radiateur selon l'une quelconque des revendications 1 à 10, comprenant les étapes consistant à :
prévoir un corps extrudé, deux éléments de fermeture et deux ailettes,
agencer chacun des deux éléments de fermeture sur une extrémité de tête respective du corps,
agencer chacune des ailettes sur un côté respectif du corps extrudé, et
appliquer un traitement thermique sur le radiateur dans un four de brasage, afin d'interconnecter de manière fixe le corps extrudé, les éléments de fermeture et les ailettes et facultativement
comprenant en outre, avant l'étape consistant à agencer chacune des ailettes sur un côté respectif du corps extrudé, les étapes consistant à :
agencer un élément de raidissement d'ailette sur chacun des côtés respectifs du corps extrudé, et
agencer un élément de raidissement d'ailette sur les surfaces distales sur chacune des ailettes.
